# EUROPEAN PATENT SPECIFICATION

(11) **EP 0 545 698 B1**
(45) Date of publication and mention of the grant of the patent: **13.03.1996**
(21) Application number: 92311020.9
(22) Date of filing: 03.12.1992
(51) Int. Cl.: H02K 5/22, H02K 23/66, H02K 11/00, A63H 29/22

(54) **A contact structure for toy motors**
Kontaktaufbau für Spielzeugmotoren
Structure de contact pour moteurs de jouet

(30) Priority: 03.12.1991 JP 99506/91
(43) Date of publication of application: 09.06.1993
(73) Proprietor: MABUCHI MOTOR KABUSHIKI KAISHA, Matsudo-shi, Chiba-ken (JP)
(72) Inventor: Itou, Fumiyoshi, Mabuchi Motor K. K., Matsudo-shi, Chiba-ken (JP)
(74) Representative: Hitchcock, Esmond Antony

(56) References cited:
- WO-A-89/09997
- US-A- 3 477 173

## Description

The present invention relates to a contact structure having a switching function for making and breaking electrical connections between a motor in a toy and a battery power source. It relates particularly to such a contact structure that facilitates the smooth and positive joining of a battery case housing a battery and a motor case housing a motor.

Toys are known in which a case housing a motor is coupled to a case housing a battery for driving the motor. The coupling is such that simultaneously with the cases being joined the battery is positioned such that it can readily be connected to the motor. A typical such toy has cases which after coupling can be relatively rotated to make or break an electrical connection.

In toys of the type referred to above, in which the cases can be rotated to switch the motor on or off, the disposition of the terminals that must make contact when the cases are joined can be a problem. One pair of terminals must be located at a sufficient radius to enable the switching system to function. This can lead to difficulties in the assembly of the toy if the two cases are not precisely aligned prior to coupling.

A prior art motor of this type is disclosed in document US-A-3 477 173.

The present invention is directed at a contact structure for toy motors in which a battery case housing a battery and a motor case housing a motor are detachably and relatively rotatably joined with the end of the battery case received in the end of the motor case and terminals are disposed at the ends of both cases such that they can be selectively brought into contact with each other. According to the invention, the cross-section of the end of the motor case terminal is U shaped with its closed end oriented outward, and the battery case terminal has a radially inner surface adapted to engage the radially outer surface of the closed end of the motor case terminal upon joining and at a predetermined orientation of the cases. This contact structure simplifies the coupling of the battery and motor cases while preserving the facility of positive switching.

A toy of the prior art, and an embodiment of the present invention will now be described by way of example, and with reference to the accompanying schematic drawings wherein:
Figure 1 is a longitudinal sectional view illustrating a known type of submersible toy;
Figure 2 is an enlarged end view of the motor case shown in Figure 1;
Figure 3 is an enlarged detail view showing how the battery case and the motor case of Figure 1 are joined together;
Figure 4 is a longitudinal sectional detail view illustrating an embodiment of the present invention;
Figure 5 is an end view similar to Figure 2, showing the motor case in Figure 4;
Figures 6A to 6C are enlarged plan sectional and front views of the motor terminals in Figure 4; and
Figure 7 is a detail view similar to Figure 3, showing how the battery case and the motor case of Figure 4 are joined together.

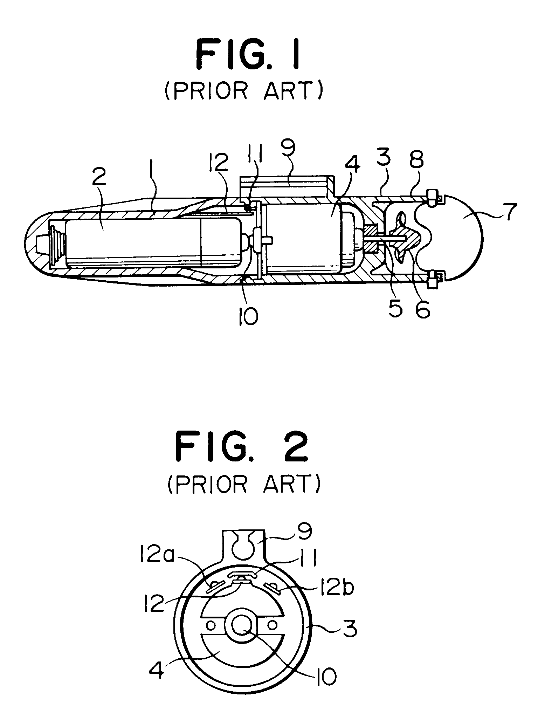

As shown in Figure 1 a cylindrical battery case 1 with a closed end houses a battery 2. A cylindrical motor case 3 houses a motor 4. A shaft 5 protrudes from a closed end of the motor case 3, to which shaft a propeller 6 is fitted. A rudder 7 is pivotally mounted on supports 8 projecting from the closed end of the motor case 3.

A mounting part 9 is integrally provided on the side surface of the motor case 3. Positive (10) and negative (11) terminals are disposed at the open end of the motor case 3, the negative terminal 11 being in contact with a negative terminal 12 of the battery case 1. As can be seen in Figure 1, terminal 12 is shown in contact with the inner circumferential surface of terminal 11 and in such a manner that the outer circumferential surface of the battery case 1 can be detachably and relatively rotatably joined with the inner circumferential surface of the motor case at the junction therebetween. With a battery 2 installed as shown in the case 1, coupling the cases 1 and 3 results in the positive battery terminal making electrical contact with the positive terminal 10 on the motor case.

In the assembly shown in Figure 1 and 2, the motor 4 can be driven to cause the propeller 6 to rotate by joining the battery case 1 with the motor case 3 and rotating these relative to one another until the negative terminals 11 and 12 make contact. To stop the motor 4, the electrical connection is broken by relative rotation of the cases 1 and 3 to separate the terminals 11 and 12. This is further illustrated in Figure 2, which shows the orientation of the cases with the terminals making contact. If the cases are rotated to a position where the negative terminal 12 is located at 12a or 12b, the motor 4 is turned off. To clearly indicate the state where the negative terminals 11 and 12 are separated and brought into contact, mating marks (not shown) are provided on the outer circumferential surface at the junction between the battery case 1 and the motor case 3.

Because the negative terminal 12 provided on the battery case 1 is located on the axial side of the negative terminal 11 provided on the motor case 3, difficulties can arise when joining the cases together.

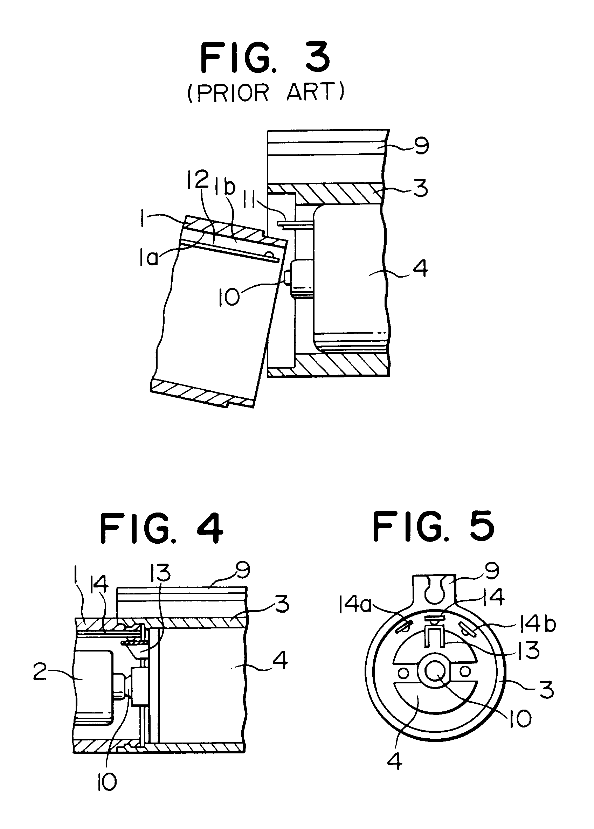

As shown in Figure 3, a gap 1b in the battery case 1 into which the negative terminal 11 provided on the motor case 3 must fit is very small. One reason for this is that the negative terminal 12 on the battery case 1 is located in the vicinity of the inner circumferential surface 1a of the battery case 1. For ease of illustration the battery 2 is not shown in Figure 3. If the battery case 1 is advanced by mistake in the joining direction with the end of the battery case 1 on the axial side of the negative terminal 11, as shown in Figure 3, the negative terminal 11 may be sandwiched between the outer circumferential surface of the battery case 1 and the inner circumferential surface of the motor case 3, making it impossible to electrically connect the negative terminals 11 and 12.

Further, if the battery case 1 and the motor case 3 are caused to relatively rotate in the mistaken orientation as described above, the outer circumferential surface, that is, the mating surface of the end of the battery case 1 can be scratched by the negative terminal 11, and when the mistaken orientation is corrected, the result can be insufficient mating with the motor case 3, and also in poor electrical connection.

In the embodiment of the invention illustrated in Figures 4 to 7, like parts are indicated by like numerals where appropriate. However, the motor terminal and battery terminal 14 on the motor case 3 and the battery case 1 respectively, take a form different from the terminals 11, 12 of Figure 1 in that inter alia, the outer circumferential surface of the motor terminal 13 can be brought into contact with, and separated from the inner circumferential surface of the battery terminal 14, to turn the motor 4 on and off as required. This is achieved by relative rotational movement of the cases 1, 3 such that when the battery terminal 14 is located at 14a or 14b, as shown in Figure 5, the motor 4 is turned off.

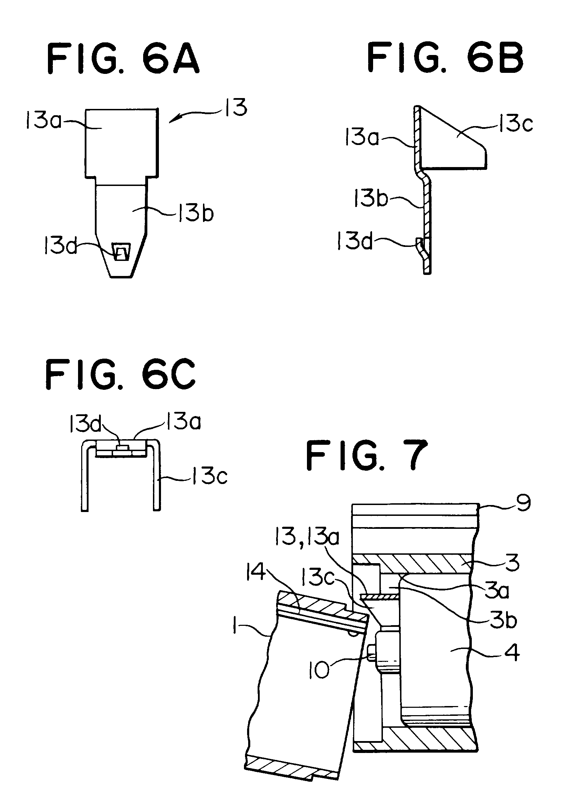

As shown in Figures 6A, 6B and 6C, the cross-section of the end of the motor terminal 13 is a U shape having a closed end 13a oriented radially outwards and the open end oriented radially inwards, relative to the axial line of the motor 4 as shown in Figure 5. Substantially triangular wings 13c are integrally formed on the side edges on the end of the strip-shaped base 13b. The base 13b is formed with a projection 13d for holding a brush arm.

With the construction shown in Figures 4 to 6, when the battery case 1 and the motor case 3 are correctly coupled, the inner circumferential surface of the battery terminal 14 is located radially outward of the motor terminal 13. Switching is therefore effected by rotating the battery case to bring the battery terminal 14 and the motor terminal 13 selectively into or out of contact with each other. However, and as shown in Figure 7, if the battery case 1 is advanced towards the motor case 3 out of proper alignment, for example with the axial lines of the battery case 1 and motor case 3 inclined, the end of the battery case 1 comes in contact with the end edges of the wings 13c of the motor terminal 13. As a consequence, the battery case 1 only pushes up the motor terminal 13, and the further advancement of the battery case 1 in the joining direction can be prevented. Thus, a fail-safe function is accomplished. On the other hand, the gap 3b between the motor terminal 13 and the inner circumferential surface 3a of the motor case 3 can be made larger than that between the battery case 1 and the battery terminal 14, and this facilitates proper coupling as the battery terminal 13 can be advanced relatively easily into the larger gap 3b.

In the embodiment of the invention described above, the end edges of the wings 13c of the motor terminal 13 are inclined with respect to the axial line of the motor case 3. However, the same preventative effect can be achieved if these end edges are formed so as to intersect orthogonally with the axial line. Preferably, the inclination of the end edges to the axial line is in the range 45° to 90°. A particularly preferred angle is 60°. The closed end 13a of the motor terminal may be formed not only into a flat surface but also into a cylindrical or spherical surface concentric with the axial line of the motor case 3, for example, or other appropriate surfaces so long as the switching action described above remains functional.

The principle benefits offered by the present invention can be summarised as follows:
(1) Since the gap between the motor case terminal and the inner circumferential surface of the motor case can be made larger than in the prior art, the battery case terminal can be easily and smoothly inserted into the gap, facilitating the coupling of the battery case and the motor case.
(2) The chance that the battery case and the motor case can be incorrectly coupled by mistake or for any other reason is reduced. Switching errors due to the unwanted nipping of the motor terminal, or the improper coupling of the cases due to chipping of the case mating surfaces that had been often experienced in the past can be substantially prevented. All this improves positive switching between terminals.

## Claims

1. A contact structure for toy motors in which a battery case (1) housing a battery (2) and a motor case (3) housing a motor (4) are detachably and relatively rotatably joined with the end of the battery case (1) received in the end of the motor case (3), and terminals (13, 14) are disposed at the ends of both cases (1, 3) such that they can be selectively brought into contact with each other
CHARACTERISED IN THAT
the cross-section of the end of the motor case terminal (13) is U-shaped with its closed end (13a) oriented outward, and the battery case terminal (14) has a radially inner surface adapted to engage the radially outer surface of the closed end (13a) of the motor case terminal (13) upon joining and at a predetermined orientation of the cases (1, 3).

2. A contact structure according to Claim 1 wherein the outer surface of the closed end (13a) of the motor case terminal (13) is substantially flat.

3. A contact structure according to Claim 1 wherein the outer surface of the closed end (13a) of the motor case terminal (13) is curved.

4. A contact structure according to any preceding Claim wherein the end edges of the motor case terminal (13) along the legs of the U-shape cross-section are inclined relative to the axial line of the motor case (3).

5. A contact structure according to Claim 4 wherein the angle of inclination is in the range 45° to 90°.

6. A contact structure according to any preceding Claim wherein relative rotation of the cases (1, 3) moves the terminals (13, 14) relative to each other along a circular arc between engaged and disengaged positions (12a, 12b).

7. A toy motor in which a battery case (1) housing a battery (2) and a motor case (3) housing a motor (4) are detachably and relatively rotatably joined with the end of the battery case (1) received in the end of the motor case (3), and terminals (13, 14) are disposed at the ends of both cases (1, 3) such that they can be selectively brought into contact with each other, including a contact structure according to any preceding Claim.

## Patentansprüche

1. Kontaktaufbau für Spielzeugmotoren, bei dem ein zur Aufnahme einer Batterie (2) dienendes Batteriegehäuse (1) und ein Motorgehäuse (3) mit einem darin untergebrachten Motor (4) lösbar miteinander und relativ drehbar zueinander verbunden sind, wobei das Ende des Batteriegehäuses (1) im Ende des Motorgehäuses (3) aufgenommen ist, und Anschlüsse (13, 14) an den Enden der beiden Gehäuse (1, 3) so angeordnet sind, daß sie wahlweise miteinander in Kontakt gebracht werden können,
**dadurch gekennzeichnet,**
daß der Querschnitt des Endes des Motorgehäuseanschlusses (13) U-förmig ist, wobei die geschlossene Seite (13a) nach außen gerichtet ist, und der Batteriegehäuseanschluß (14) eine in Radialrichtung gesehen innere Oberfläche hat, die geeignet ist, um an der in Radialrichtung gesehen äußeren Oberfläche der geschlossenen Seite (13a) des Motorgehäuseanschlusses (13) anzugreifen, wenn die Gehäuse (1, 3) zusammengefügt und eine vorbestimmte Orientierung zueinander haben.

2. Kontaktaufbau nach Anspruch 1, bei dem die äußere Oberfläche der geschlossenen Seite (13a) des Motorgehäuseanschlusses (13) im wesentlichen flach ausgebildet ist.

3. Kontaktaufbau nach Anspruch 1, bei dem die äußere Oberfläche der geschlossenen Seite (13a) des Motorgehäuseanschlusses (13) gekrümmt ist.

4. Kontaktaufbau nach irgendeinem vorangegangenen Anspruch, bei dem die Stirnkanten des Motorgehäuseanschlusses (13) längs der Schenkel des U-förmigen Querschnitts in bezug auf die Mittenachse des Rotorgehäuses (3) geneigt sind.

5. Kontaktaufbau nach Anspruch 4, bei dem der Neigungswinkel in einem Bereich von 45° bis 90° liegt.

6. Kontaktaufbau nach irgendeinem vorangegangenen Anspruch, bei dem eine Relativdrehung der Gehäuse (1, 3) die Anschlüsse (13, 14) in bezug aufeinander längs eines Kreisbogens zwischen miteinander in Angriff und miteinander nicht in Angriff befindlichen Positionen 12a, 12b) verschiebt.

7. Spielzeugmotor, bei dem ein Batteriegehäuse (1) zur Aufnahme einer Batterie (2) und ein Motorgehäuse (3), in dem ein Motor (4) angeordnet ist, voneinander lösbar und zueinander relativ drehbar verbunden sind, wobei das Ende des Batteriegehäuses (1) im Ende des Motorgehäuses (3) aufgenommen ist, und an den Enden beider Gehäuse (1, 3) Anschlüsse derart angeordnet sind, daß sie wahlweise miteinander in Kontakt gebracht werden können, enthaltend einen Kontaktaufbau nach irgendeinem vorangegangenen Anspruch.

## Revendications

1. Structure de contact pour moteurs de jouets dans laquelle un boîtier à pile (1) contenant une pile (2) et un boîtier à moteur (3) contenant un moteur (4) sont reliés de façon détachable et rotative l'un par rapport à l'autre, l'extrémité du boîtier à pile (1) étant reçue dans l'extrémité du boîtier à moteur (3), et des bornes (13, 14) sont disposées aux extrémités des deux boîtiers de manière qu'elles puissent être amenées sélectivement en contact l'une avec l'autre,
caractérisée en ce que
la section transversale de l'extrémité de la borne (13) du boîtier à moteur est en forme de U, son extrémité fermée (13a) étant orientée vers l'extérieur, et la borne (14) du boîtier à pile comprend une surface radialement interne adaptée à venir en engagement avec la surface radialement externe de l'extrémité fermée (13a) de la borne (13) du boîtier à moteur après jonction et selon une orientation prédéterminée des boîtiers (1,3).

2. Structure de contact selon la revendication 1, caractérisée en ce que la surface externe de l'extrémité fermée (13a) de la borne (13) du boîtier à moteur est plane.

3. Structure de contact selon la revendication 1, caractérisée en ce que la surface externe de l'extrémité fermée (13a) de la borne (13) du boîtier à moteur est courbe.

4. Structure de contact selon l'une quelconque des revendications précédentes, caractérisée en ce que les bords d'extrémité de la borne (13) du boîtier à moteur le long des branches de la section en forme de U sont inclinés par rapport à la ligne axiale du boîtier à moteur (3).

5. Structure de contact selon la revendication 4, caractérisée en ce que l'angle d'inclinaison est compris entre 45° et 90°.

6. Structure de contact selon l'une quelconque des revendications précédentes, caractérisée en ce que la rotation relative entre les boîtiers (1, 3) déplace les bornes (13, 14) l'une par rapport à l'autre le long d'un arc circulaire entre les positions d'engagement et de dégagement (12a, 12b).

7. Moteur de jouet dans lequel un boîtier à pile (1) contenant une pile (2) et un boîtier à moteur (3) contenant un moteur (4) sont reliés de façon détachable et relativement rotative alors que l'extrémité du boîtier à pile (1) est reçue dans l'extrémité du boîtier à moteur (3), et des bornes (13, 14) sont disposées aux extrémités des deux boîtiers (1, 3) de manière qu'elles puissent être amenées sélectivement en contact l'une avec l'autre, comprenant une structure de contact selon l'une quelconque des revendications précédentes.
